# EUROPEAN PATENT SPECIFICATION

(11) **EP 3 988 897 B1**
(45) Date of publication and mention of the grant of the patent: **27.09.2023**
(21) Application number: 20202774.4
(22) Date of filing: 20.10.2020
(51) Int. Cl.: G01C 15/00

(54) **ELECTRONIC SURVEYING INSTRUMENT**
INSTRUMENT ZUR ELEKTRONISCHEN VERMESSUNG
INSTRUMENT D'ARPENTAGE ÉLECTRONIQUE

(43) Date of publication of application: 27.04.2022
(73) Proprietor: Leica Geosystems AG, 9435 Heerbrugg (CH)
(72) Inventor: METZLER, Reto, CH-9445 Rebstein (CH); BÖSCH, Thomas, A-6890 Lustenau (AT); MÜLLER, Josef, CH-9413 Oberegg (CH)
(74) Representative: Kaminski Harmann

(56) References cited:
- EP-A1- 2 053 353
- US-A1- 2002 051 288
- US-A1- 2009 220 145

## Description

The present invention relates to an electronic surveying instrument and to a method for projecting light onto an object surveyed by the electronic surveying instrument.

Electronic surveying instruments for surveying or projection e.g. of point coordinates are known in the art. Such surveying appliances for tracking or marking and surveying spatial points on surfaces of a structure or object are particularly used for measuring of a surrounding or workpiece, in particular large entities such as fuselages, or for construction or inspection of buildings. The distance and angle from such a measuring device to one or more target points to be surveyed can be recorded as spatial standard data. On the other hand, planned position data, e.g. based on a digital building plan or CAD-data, can be projected in a position true manner on an object's surface by a laser beam for layout or stake out purposes. Such instruments are used for traditional geodesy (land surveying) or for geodetic measuring in the industry (e.g. 3D-coordinate acquisition of workpieces for quality control) as well as for accurate construction of buildings like streets, tunnels or houses and for interior construction or assembly tasks, e.g. using templating, by designers like architects, kitchen makers, glaziers, tilers or staircase builders, e.g. for as-built data capture. It is emphasized that, in the present application, the terms "geodesy" and "geodetic" are not limited to the scientific discipline that deals with the measurement and representation of the surface of the earth and the seafloor, but relate in a broad sense to measuring, surveying and position determining or projection of object points in order to acquire digital object coordinates or mark digital object coordinates in space.

Known geodetic instruments of the generic type such as construction surveying appliances typically comprise a base, an upper part mounted so as to be able to rotate about an axis of rotation on the base, and a sighting unit, mounted so as to be able to swivel about a swivel axis, with a laser source, which is designed to emit a laser beam, and an imaging detector, for example equipped with an orientation indicating functionality for indicating an orientation of the sighting unit with respect to a spatial point as a sighting point, and also with a distance determining detector for providing a distance measuring functionality. By way of example, the orientation indicating functionality may be a reticle in the viewfinder or a camera as imaging detector.

Modern, automated construction surveying appliances furthermore comprise rotary drives, which make the upper part and/or the sighting unit drivable in a motorized manner, goniometers and, if appropriate, inclination sensors for determining the spatial orientation of the sighting unit, and also an evaluation and control unit, which is connected to the laser source, the distance determining detector and also the goniometers and, if appropriate, inclination sensors.

In this case, the evaluation and control unit is equipped, by way of example, with a display having input means for inputting control commands from a user on the display (e.g. touchscreen) or what is known as a joystick that is directable, for the purpose of altering the orientation of the sighting unit by directing the joystick, and for presenting an image from the imaging detector or the camera on the display, wherein the orientation of the sighting unit can be indicated by means of the orientation indicating functionality on the display, e.g. by means of overlaying. Functionalities are known in which the input means on the display are in the form of arrows, the marking and touching of which enable a user to alter the orientation of the sighting unit in a horizontal or vertical direction.

On the other hand, projection of visible or invisible points or lines is used for providing positional reference points or lines serving as a reference for either the human eye or for electronic systems and also allowing automatic positioning or machine guidance. Here, the reference lines are usually created by widening a laser beam, which is possible for straight lines in particular, or else by rotating projection of a laser point.

An example of geodetic instruments suitable for this are rotating lasers or line or point lasers, which serve to fix a plane using a visible or invisible laser beam and have been in use for a number of years now, for example in the building trade or in industry. They are a valuable aid for marking construction lines on horizontal, vertical or else defined angled planes.

DE 44 43 413 discloses a method and a device for both measuring and marking on distanced lines or areas. One or more relevant spatial points are measured in respect of in each case two spatial angles and the distance in relation to a reference point using a laser-distance measuring unit, mounted in a cardan-type mount. The laser-distance measuring unit is pivotable about two mutually perpendicular axes which are equipped with goniometers. In accordance with one embodiment described in these documents, spatial points to be measured are targeted manually, marking points are calculated from the measurement data based on a predetermined relative relationship between measuring and marking, which marking points are then targeted independently by the measuring and marking device.

As another example, EP 2 053 353 discloses a reference line-projecting unit with an electro-optical distance measuring unit. In accordance with the teaching of this application document, an optical reference beam, in particular a laser beam, is routed along a defined reference path. By integrating a distance measuring unit, the system disclosed in EP 2 053 353 also enables a control of the projection on the basis of an established surface topography.

As can be seen, a large number of technical arrangements and methods are known for measuring and/or marking spatial points in the course of construction or development of buildings. Also, in order to fulfil complex surveying tasks, in particular in a free terrain, geodetic total stations or theodolites, as known in the generic prior art, have been used for many years. Such devices are, in principle, technically also suitable for fulfilling a plumb point finding functionality, for example during interior finishing of a building. However, they are technically relatively complex and costly devices.

The projection of visible points or lines onto the surface of an object to be surveyed, the projection providing positional reference points or lines serving as a reference for the human eye, may introduce imaging errors in images acquired of the object's surface, the images being displayed to the human eye via a display. Such imaging errors may arise due to oversaturation of an image sensor providing the images, or due to stray light emerging e.g. in the optical lens system focussing light onto the image sensor due, the stray light arising from reflected projected visible light entering the optical lens system.

It is therefore an objective of the invention to provide a method for reducing imaging errors in electronic surveying instruments due to projected light for positional reference. It is a further objective of the invention to provide an electronic surveying instrument with reduced imaging errors due to projected light for positional reference.

These objectives are achieved by the realization of the characterizing features of the independent claims. Features that develop the invention in an alternative or advantageous manner can be gathered from the dependent patent claims and also the description including the descriptions of figures. All embodiments of the invention that are illustrated or disclosed in some other way in this document can be combined with one another, unless expressly stated otherwise.

The invention relates to a method according to claim 1.

Projection light emitted by e.g. a laser pointer may be used for visualization purposes and/or for measuring, e.g. for distance measuring.

The emitted projection light may be a part of emitted measurement light used for measuring the object. The targeting state may be a reference point, for example. Images of the object onto which the projection light is projected are acquired using an image sensor. The image sensor may operate with a frame rate which is high enough so that a human eye presented with the acquired sequence of images perceives the images as continuous. The projection light may also be emitted in such a way that it appears to be continuous to a human eye. Each image of the sequence of images is acquired during an image acquisition phase, during which the image sensor acquires the image. After an image is acquired, the image may e.g. need to be read out from the image sensor. During this time, the image sensor does not acquire new images. The respective time is an image acquisition pause.

The emitted projection light and the acquiring of the sequence of images are synchronized in such a way that for a first subsequence, the first subsequence comprising at least one image, the received power of the received projection light is lower during those image acquisition phases corresponding to the first subsequence than during remaining times of the acquiring of the sequence of images, the remaining times being the overall time of the image sequence acquisition minus the image acquisition phases corresponding to the first subsequence. The received power may be an average power averaged over time, e.g. over the image acquisition phases corresponding to the first subsequence, or the received power may be a peak received power. The first subsequence may be equal to the sequence of images. The remaining times may correspond to the image acquisition phases in case the first subsequence is equal to the sequence of images, or the remaining times may also comprise image acquisition phases. The first subsequence comprises images which may be displayed to the human eye.

Imaging errors due to e.g. an oversaturation of the image sensor to received projection light and/or stray light caused by the projection light may be avoided or minimized for the first subsequence.

Synchronization may proceed via a shared clock, for example, or by other digital means, for example by a controller controlling the projection light source and/or the image sensor.

The emitted projection light may be periodic, for example periodically pulsed, or non-periodically emitted by the projection light source.

In an embodiment of the method according to the invention, the projection light has a wavelength in the visible spectrum.

The projected light may preferentially be visible for a human eye.

The projection light may also not be visible to the human eye. In case the projection light is not visible, a cross-hair may be used, for example, to help a user with aiming. An aiming aid, e.g. a cross-hair, is displayed on an acquired image of a scene. The cross-hair may indicate to a user the currently aimed at point. In case the projection light is visible to the human eye and power of the projection light is close to zero during image acquisition, a cross-hair may be used to indicate a target to the user.

In a first alternative of the method according to the invention, the synchronizing is done in such a way that for at least the first subsequence the received power is zero during image acquisition phases.

The first subsequence may be artifact-free from image artifacts caused by the received projection light or received stray light caused by the projection light. If both the acquiring of the sequence of images and the emitting of the projection light are periodic, zero received power during image acquisition phases of the first subsequence may be achieved by suitably setting a fundamental frequency of the image sensor, i.e. the frame rate, and the duration of image acquisition phases and image acquisition pauses as well as the fundamental frequency of the emitted periodic projection light and its emitted waveform.

In another embodiment of the method according to the invention, a union of a nonempty second subsequence of the sequence of images and the first subsequence forms the sequence of images, and difference images using images of the first and second subsequence are provided.

The first subsequence may not be equal to the sequence of images. At least one image of the sequence of images may be such that the received power of the received projection light during the at least one image's image acquisition phase is larger than the received power during the image acquisition phases of the first subsequence. The second subsequence, the second subsequence comprising images in which the received projection light is better visible than in those images belonging to the first subsequence, may be used for obtaining difference images, the difference images clearly showing the received projection light.

In a second alternative of the method according to the invention, the synchronizing is done in such a way that the received power in the first subsequence is adapted to a saturation level of the image sensor, in particular adapted in such a way that oversaturation is prevented.

It may be sufficient to synchronize the emitting of the projection light and the acquiring of the sequence of images in such a way that during the image acquisition phases of the first subsequence the image sensor is not over-saturated by the received projection light.

In another embodiment of the method according to the invention, images of the second subsequence from the sequence of images are in-situ identified and discarded, wherein the identifying is done using at least the images and information about the image sensor.

Images belonging to the second subsequence may be determined in-situ, for example by an automatic algorithmic procedure, and subsequently discarded. The identification may proceed by using knowledge about the image sensor, for example saturation characteristics of the image sensor.

In another embodiment of the method according to the invention, the identifying is based on the synchronization.

The synchronization may be used to identify the second subsequence. In case the synchronizing is fully controlled, the received power during image acquisition phases may be pre-computed. In that case, the second subsequence may be determined based on the synchronization.

In another embodiment of the method according to the invention, the sequence of images is acquired in a rolling shutter manner, and the synchronizing is at least done for rolling shutter scan lines intersecting parts of the image sensor on which the received projection light falls.

In case the image sensor operates in a rolling shutter manner, the synchronizing may only be done for those scan lines of the image sensor on which the received projection light falls. Such a scheme may require knowledge about the scan lines requiring synchronizing, the required knowledge for example corresponding to a known geometric configuration of the electronic surveying instrument to the surveyed object.

In another embodiment of the method according to the invention, the first sequence is displayed to a user of the electronic surveying instrument.

The invention also relates to an electronic surveying instrument, in particular a total station, laser tracker, electronic distance meter, stake-out instrument or laser scanner, with 1) a projection light emitting unit, in particular a laser 2) an optical emitting light path from the projection light emitting unit to an object, and 3) an optical receiving light path from the object to an image sensor with a frame rate, in particular 20fps or higher, wherein the image sensor is configured in such a way that after each image acquisition phase an image acquisition pause follows, the image sensor being sensitive for the projection light. The electronic surveying instrument is characterized in that the projection light emitting unit and the image sensor are synchronized in such a way as to provide the method according to the invention.

In an embodiment of the electronic surveying instrument according to the invention, the electronic surveying instrument comprises a controller unit configured to provide the synchronization between the projection light emitting unit and the image sensor.

A controller unit may provide the synchronization between the emitted projection light and the acquiring of the sequence of images. The controller unit may access the projection light emitting unit and/or the image sensor. The controller unit may control only the projection light emitting unit, or it may control only the image sensor, or it may control both. The controller unit may have knowledge about operation characteristics of the uncontrolled projection light emitting unit or the uncontrolled image sensor.

In another embodiment of the electronic surveying instrument according to the invention, the optical receiving light path is free of dedicated optical filters for the projection light.

In case the emitted projection light and the acquiring of the sequence of images are carried out using the method according to the invention, no or a small amount of received projection light may fall on the image sensor during image acquisition phases corresponding to the first subsequence. No additional filters may then be required to filter out projection light.

In another embodiment of the electronic surveying instrument according to the invention, the projection light emitting unit comprises a chopper wheel or a liquid crystal shutter, wherein the chopper wheel or the liquid crystal shutter are controlled by the controller unit, and/or the controller unit is configured to turn the projection light emitting unit on and off.

The synchronizing may be provided by the controller unit controlling a chopper wheel or a liquid crystal shutter, for example. By changing the rotation frequency of the chopper wheel, for example by controlling a motor controlling the chopper wheel, the emitted projection light may be controlled by the controller unit. Synchronization may alternatively be provided by directly modulating the projection light emitting unit using control electronics to produce a desired form of projection light. The control electronics may be part of the controller unit or separate from the controller unit. A possible implementation would be to consecutively switch the projection light emitting unit on and off, in particular by consecutively turning the laser on and off. Any other method for synchronizing may be used as well.

In another embodiment of the electronic surveying instrument according to the invention, the electronic surveying instrument further comprises a display, wherein the display is in particular linked via a wireless or wired connection to the image sensor and/or to the controller unit, configured to display the first subsequence to a user of the electronic surveying instrument.

The display may be wirelessly connected to the image sensor and/or to the controller unit, or the display may connected with a wired connection to the image sensor and/or to the controller unit.

The geodetic instrument according to the invention is described or explained in more detail below, purely by way of example, with reference to working examples shown schematically in the drawing. Identical elements are labelled with the same reference numerals in the figures. The described embodiments are generally not shown true to scale and they are also not to be interpreted as limiting the invention.
- Figure 1: shows a first schematic and illustrative depiction of an electronic surveying instrument;
- Figure 2: shows a second schematic and illustrative depiction of an electronic surveying instrument;
- Figure 3: shows a third schematic and illustrative depiction of an electronic surveying instrument;
- Figure 4: shows a schematic and illustrative depiction of a biaxial electronic surveying instrument;
- Figure 5: shows a schematic and illustrative depiction of a time course of emitted projection light and image acquisition according to the invention;
- Figure 6: shows a schematic and illustrative depiction of a time course of emitted projection light and image acquisition according to the state of the art;
- Figure 7: shows a schematic and illustrative depiction of a time course of emitted projection light and image acquisition according to the invention;
- Figure 8: shows a schematic and illustrative depiction of a time course of emitted projection light and image acquisition according to the invention;
- Figure 9: shows a schematic and illustrative depiction of a time course of emitted projection light and image acquisition according to the invention; and
- Figure 10: shows a fourth schematic and illustrative depiction of an electronic surveying instrument.

In the following Figures, image acquisition phases and image acquisition pauses are drawn in such a way as to indicate equal temporal extent of the two. In general, an image acquisition phase need not be equally long as an image acquisition pause, however.

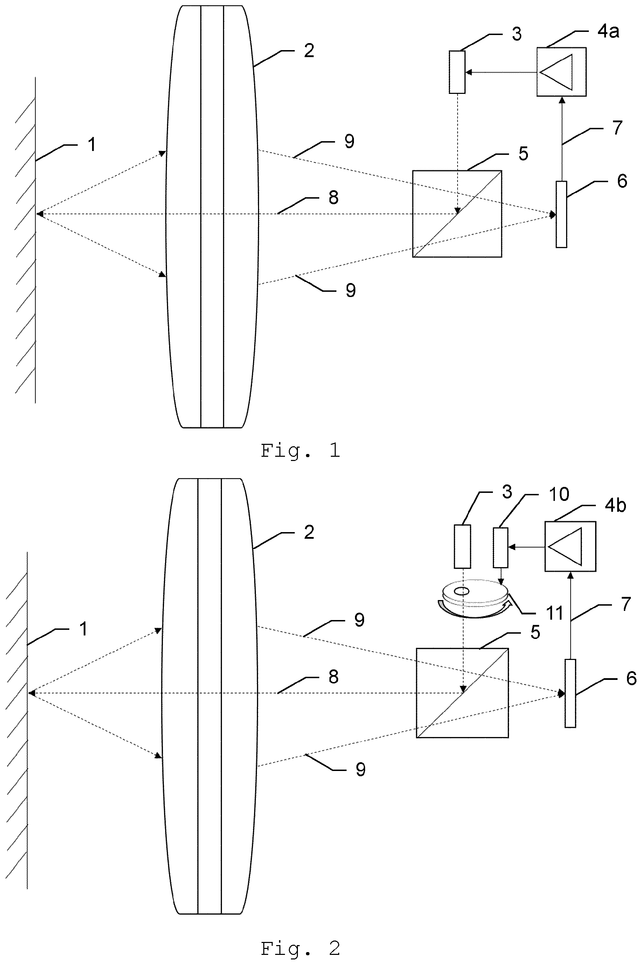

**Figure 1** shows a first schematic and illustrative depiction of an electronic surveying instrument. The electronic surveying instrument comprises a laser pointer 3, an image sensor 6, a control unit 4a, a beam splitter 5 and an optical lens system 2 for projection light emitted by the laser pointer 3 towards an object 1 and for capturing light reflected from the object 1. The control unit 4a directly controls the laser pointer 3. The control unit 4a itself is connected 7 to the image sensor 6. The image sensor 6 acquires a sequence of images with a frame rate, i.e. the images are acquired equidistantly in time. The acquisition of each image may be divided into two time periods: during a first time period, the image sensor is sensitive to incoming light; during a second time period, the image sensor is not sensitive to incoming light. The image itself is taken during the first time period, and the second time period may be used for reading out the taken image, for example. The combination of first time period and second time period is repeated periodically, the repetition frequency being the frame rate. As the control unit 4a is connected to the image sensor 6, the control unit 4a is aware of the times at which the periodic repetitions of the first time period and of the second time period occur. Preferentially, the control unit 4a instructs the laser pointer 3 to emit pulsed projection light 8, wherein the pulses are sent out during the periodic repetitions of the second time period. This way, the pulsed projection light 8 is not visible in the images acquired by the image sensor 6. The pulsed projection light 8 is directed onto the object with the beam splitter 5. Light 9 reflected from the object 1 is focused by the optical lens system 2 onto the image sensor 6. The acquired images of the object 1 are therefore free of artifacts caused by the projection light. The pulsed projection light 8 is preferentially light in the visible frequency range so that is can be seen by a human operator of the electronic surveying instrument as it impinges on the object. The projection light is not visible in the acquired images. The projection light impinging on the object is visible to a human eye but not in the acquired images.

**Figure 2** shows a second schematic and illustrative depiction of an electronic surveying instrument. Figure 2 is similar to Figure 1. The main difference lies in the way the pulsed projection light 8 is generated. In Figure 2, a control unit 4b controls a motor 10 controlling a chopper wheel 11. The chopper wheel 11 rotates around a fixed axis, wherein the rotation is provided by the motor 10. Depending on the rotation frequency and the size and shape of the small hole in the chopper wheel 11, differently pulsed projection light 8 can be generated.

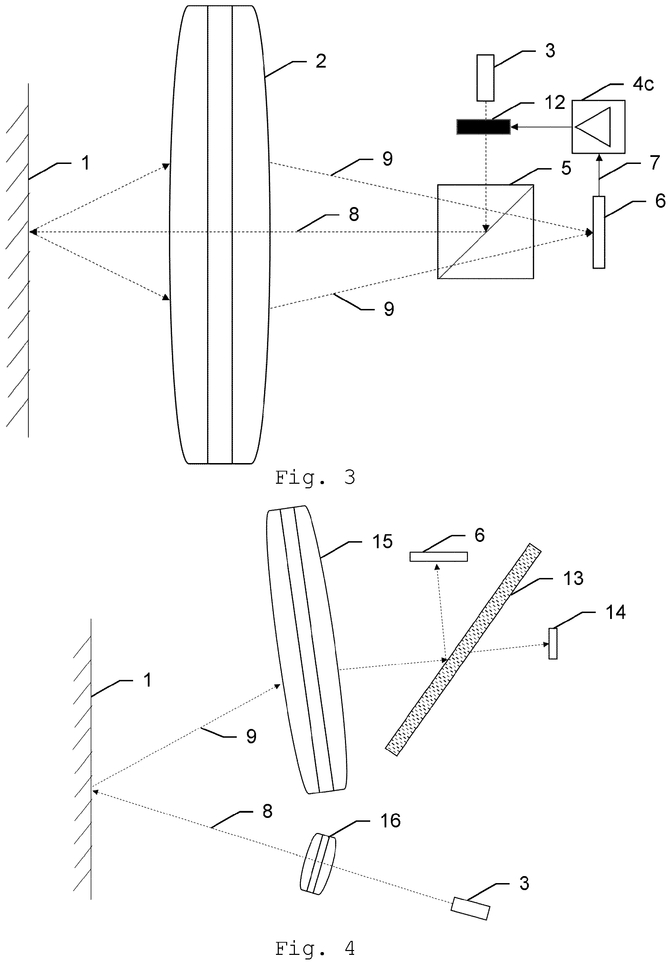

**Figure 3** shows a third schematic and illustrative depiction of an electronic surveying instrument. Figure 3 is similar to Figures 1 and 2. The main difference lies in the way the pulsed projection light 8 is generated. In Figure 3, a control unit 4c controls a liquid crystal shutter 12. Depending on the control input provided by the control unit 4c to the liquid crystal shutter, differently pulsed projection light 8 is generated.

A mechanism in the form of a shutter or a hatch may in general be used to block the projection light so as to obtain pulsed projection light.

**Figure 4** shows a schematic and illustrative depiction of a biaxial electronic surveying instrument. A laser pointer 3 emits pulsed projection light 8 towards an object 1. The pulsed projection light 8 is collimated, or alternatively focused, onto the object 1 by a projection light optical lens system 16. The collimated beam may also be a divergent beam, for example with 0.1°. Light reflected 9 from the object is focused by a receiving light optical lens system 15 onto an image sensor 6 and a distance sensor 14. A plate beam splitter 13 directs the focused light onto the image sensor 6 and onto the distance sensor 14. As in Figures 1, 2 and 3, the pulsed projection light 8 is preferentially emitted in such a way by the laser pointer 3 that it is not visible in the images of the object 1 acquired by the image sensor 6. The distance sensor 14 may use the pulsed projection light 8 for determining a distance to the object 1.

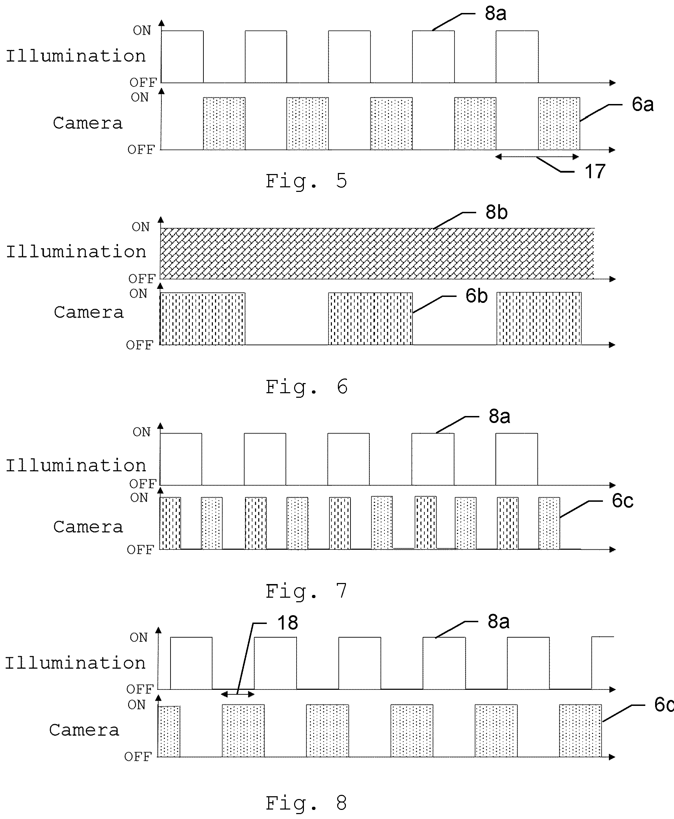

**Figure 5** shows a schematic and illustrative depiction of a time course of emitted projection light and a time course of an image acquisition process according to the invention. In Figure 5, the pulsed projection light 8a is used for illuminating a point on an object. For reasons of simplicity, the pulsed projection light 8a as shown in Figure 5 comprises two alternating states, namely *ON* and *OFF.* The emitted pulsed projection light 8a is periodic. Other time courses of the pulsed projection light 8a are feasible as well: the flanks of the pulsed projection light 8a could be smoothed as well, for example, or the pulsed projection light 8a need not be periodic. The pulsed projection light 8a is used for indicating a location to a user of an electronic surveying instrument. The pulsed projection light 8a is therefore preferentially visible light, visibility relating to the human eye. The pulsed projection light 8a can lead to artifacts in images acquired by an image sensor, however. Oversaturation of the image sensor by the received pulsed projection light reflected from an object creates image artifacts, for example. Such artifacts are detrimental for further metrological processing of the images.

The image acquisition process 6a comprises a periodic repetition of two general phases. During a first phase, the image sensor acquiring images is sensitive to light. It is during this first phase that an image is acquired. The second phase can for example be used for reading out an acquired image. The second phase can therefore also be termed image acquisition pause. The image acquisition process 6a as shown in Figure 5 is periodic, wherein the length of each period 17 is equal to one over the frame rate of the image sensor providing the image acquisition process 6a. The periodic repetition of the first phase, the image acquisition phase, is aligned in such a way in Figure 5 that image acquisition is carried out when no pulsed projection light 8a impinges on the image sensor. This way, no artifacts are obtained in the acquired images due to the pulsed projection light 8a. If the frame rate of the image sensor is large enough, both the pulsed projection light 8a and the acquired sequence of images will appear to be continuous to a human. All images acquired according to the embodiment of the invention shown in Figure 5 belong to the first subsequence as the image acquisition pauses coincide with the illumination periods. The received power of the received pulsed projection light is lower during image acquisition phases than during the remaining times, which in Figure 5 correspond to image acquisition pauses. In Figure 5, the first subsequence is visually indicated by dotted markings.

**Figure 6** shows a schematic and illustrative depiction of a time course of emitted projection light and a time course of an image acquisition process according to the state of the art. The emitted projection light 8b is continuously emitted, or it may be pulsed projection light 8b with a very high pulse repetition rate. The image acquisition process 6b comprises a periodic repetition of two general phases as in Figure 5. In Figure 5, the same power is received during image acquisition phases as during image acquisition pauses. The image acquisition phases in Figure 5 are visually indicated by striped markings.

**Figure 7** shows a schematic and illustrative depiction of a time course of emitted projection light and a time course of an image acquisition process according to the invention. The time course of the pulsed projection light 8a is the same as in Figure 5. The image acquisition process 6c comprises a periodic repetition of two general phases as in Figures 5 and 6. Each of the two general phases, however, is twice as short as compared to Figure 5, and the onset/offset of the general phases is aligned to the pulsed projection light 8a. In Figure 7, the first subsequence of the sequence of images is visually indicated by dotted markings, and the second subsequence of the sequence of images is visually indicated by striped markings. The two general phases do not need to have the same length. It is e.g. possible that the image acquisition phase is longer than the image acquisition pause. The first subsequence of images may be displayed to a user of an electronic surveying instrument using a time course of the projection light and the image acquisition process as in Figure 7. The second subsequence may e.g. be dropped, or e.g. used for determining difference images between neighboring elements of the first and second subsequence.

**Figure 8** shows a schematic and illustrative depiction of a time course of emitted projection light and a time course of an image acquisition process according to the invention. Figure 8 is similar to Figure 5, the difference being that an offset 18, the offset 18 not being equal to half a period as in Figure 5, exists between the rising flanks of the emitted projection light 8a and the image acquisition process 6d. If the offset 18 is such that the amount of pulsed projection light 8a impinging on the image sensor providing the image acquisition process is sufficiently small so that the image sensor does not experience oversaturation, then the image sequence provided during image acquisition phases fully corresponds to the first subsequence. In Figure 8, the first subsequence is visually indicated by dotted markings.

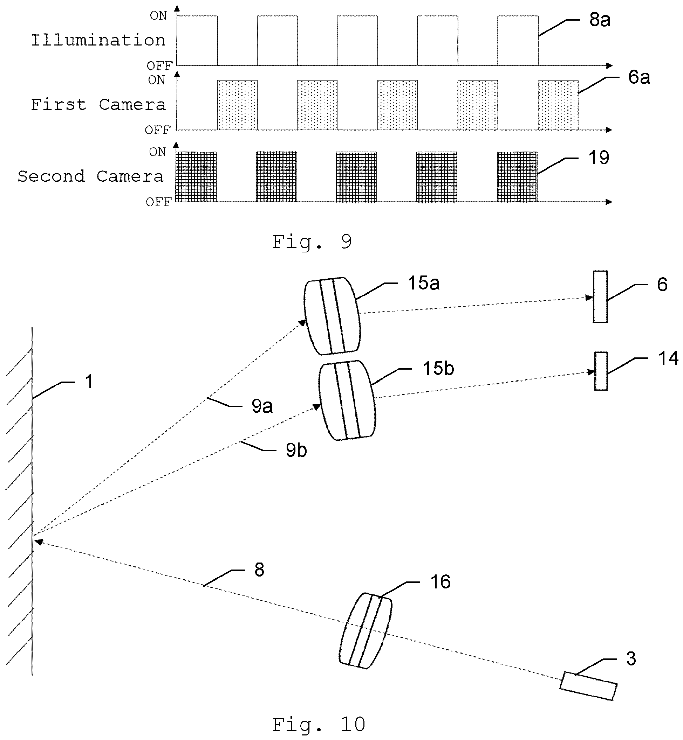

**Figure 9** shows a schematic and illustrative depiction of a time course of emitted projection light and a time course of an image acquisition process according to the invention. Two image sensors may acquire images. A first image sensor, the first image sensor belonging to a first camera, may acquire images through a first image acquisition process 6a in such a way that during image acquisition phases no reflected pulsed projection light 8a impinges on the first sensor. A second image sensor, the second image sensor belonging to a second camera, may acquire images through a second image acquisition process 19 in such a way that the second image acquisition process 19 is temporally aligned to the pulsed projection light 8a. The second image acquisition process 19 may acquire images in which the pulsed projection light 8a reflected from some object in an illuminated scene is visible. Difference images may be obtained by subtracting images of the second image sequence provided by the second camera from images of the first image sequence provided by the first camera. A similar measurement setup as in Figure 9 may also be provided using one camera only. In that case image acquisition pauses are preferentially short. Difference images provided using two cameras may have a higher SNR as compared to difference images obtained using one camera due to longer possible image acquisition times.

**Figure 10** shows a fourth schematic and illustrative depiction of an electronic surveying instrument. Figure 10 is similar to Figure 4. The main difference as compared to Figure 4 is the presence of two separate optical receiving paths for focusing reflected light 9a,9b onto an image sensor 6 and a distance sensor 14 using two separate optical lens systems 15a,15b. The two separate optical lens systems 15a,15b may have different optical properties, for example different focal lengths.

## Claims

1. Method for an electronic surveying instrument, in particular a total station, laser tracker, electronic distance meter, stake-out instrument or laser scanner, with
• emitting of projection light (8,8a), in particular laser light from a laser (3), in a targeted manner towards an object (1) for indicating a targeting state to a user,
• receiving at least part of the projection light (9,9a) reflected by the object (1), and
• acquiring a sequence of images of the object using an image sensor (6) with a frame rate, in particular 20fps or higher, and an induced succession (6a,6c,6d) of image acquisition phases and image acquisition pauses, the image sensor being sensitive for the projection light (8,8a),
**characterized by**
synchronizing the emitting of projection light (8,8a) and the acquiring of the sequence of images in such a way that for a first subsequence of the sequence of images a received power of the received projection light is lower during image acquisition phases corresponding to the first subsequence than during remaining times which are not image acquisition phases corresponding to the first subsequence, in such a way that
• for at least the first subsequence the received power is zero during image acquisition phases, and/or
• the received power in the first subsequence is adapted to a saturation level of the image sensor (6).

2. Method according to claim 1,
**characterized in that**
the projection light (8,8a) has a wavelength in the visible spectrum.

3. Method according to any of the preceding claims, **characterized in that**
• a union of a non-empty second subsequence of the sequence of images and the first subsequence forms the sequence of images, and
• difference images using images of the first and second subsequence are provided.

4. Method according to claim 3,
**characterized by**
in-situ identifying and discarding images of the second subsequence from the sequence of images, wherein the identifying is done using at least the images and information about the image sensor (6).

5. Method according to claim 4,
**characterized in that**
the identifying is based on the synchronization.

6. Method according to any of the preceding claims,
**characterized in that**
the sequence of images is acquired in a rolling shutter manner, and the synchronizing is at least done for rolling shutter scan lines intersecting parts of the image sensor (6) on which the received projection light (9) falls.

7. Method according to any of the preceding claims,
**characterized by**
displaying the first sequence to a user of the electronic surveying instrument.

8. Electronic surveying instrument, in particular a total station, laser tracker, electronic distance meter, stake-out instrument or laser scanner, with
• a projection light emitting unit (3), in particular a laser,
• an optical emitting light path (2,5,16) from the projection light emitting unit (3) to an object (1),
* an image sensor (6),
• an optical receiving light path (2,5,13,15,15a) from the object (1) to the image sensor (6) with a frame rate, in particular 20fps or higher, wherein the image sensor (6) is configured in such a way that after each image acquisition phase an image acquisition pause follows, the image sensor being sensitive for the projection light (8,8a,9),
**characterized in that**
the projection light emitting unit (3) and the image sensor (6) are synchronized in such a way as to provide the method according to one of claims 1 to 6.

9. Electronic surveying instrument according to claim 8, comprising a controller unit (4a,4b,4c) configured to provide the synchronization between the projection light emitting unit (3) and the image sensor (6).

10. Electronic surveying instrument according to claim 8 or 9,
**characterized in that**
the optical receiving light path (2,5,13,15,15a) is free of dedicated optical filters for the projection light (9).

11. Electronic surveying instrument according to claim 9,
**characterized in that**
the projection light emitting unit (3) comprises a chopper wheel (11) or a liquid crystal shutter (12), wherein the chopper wheel (11) or the liquid crystal shutter (12) are controlled by the controller unit (4b,4c), and/or the controller unit (4a) is configured to turn the projection light emitting unit (3) on and off.

12. Electronic surveying instrument according to one of claims 9 to 11,
**characterized in that**
the electronic surveying instrument further comprises a display, wherein the display is in particular linked via a wireless or wired connection to the image sensor (6) and/or to the controller unit (4a,4b,4c), configured to display the first subsequence to a user of the electronic surveying instrument.

## Patentansprüche

1. Verfahren für ein Instrument zur elektronischen Vermessung, insbesondere eine Totalstation, einen Lasertracker, einen elektronischen Entfernungsmesser, ein Absteckinstrument oder einen Laserscanner, mit
- Emittieren von Projektionslicht (8, 8a), insbesondere Laserlicht von einem Laser (3), gezielt zu einem Objekt (1) zum Angeben eines Ausrichtungszustands für einen Benutzer,
- Empfangen zumindest eines Teils des Projektionslichts (9, 9a), das von dem Objekt (1) reflektiert wird, und
- Erfassen einer Sequenz von Bildern des Objekts unter Verwendung eines Bildsensors (6) mit einer Bildfrequenz, insbesondere 20 fps oder höher, und einer induzierten Abfolge (6a, 6c, 6d) von Bilderfassungsphasen und Bilderfassungspausen, wobei der Bildsensor für das Projektionslicht (8, 8a) empfindlich ist,
**gekennzeichnet durch**
Synchronisieren des Emittierens von Projektionslicht (8, 8a) und des Erfassens der Sequenz von Bildern derart, dass für eine erste Teilsequenz der Sequenz von Bildern eine empfangene Leistung des empfangenen Projektionslichts während Bilderfassungsphasen, die der ersten Teilsequenz entsprechen, geringer ist als während verbleibender Zeiten, die keine Bilderfassungsphasen sind, die der ersten Teilsequenz entsprechen, derart, dass
∘ für mindestens die erste Teilsequenz die empfangene Leistung während der Bilderfassungsphasen null ist und/oder
∘ die empfangene Leistung in der ersten Teilsequenz an einen Sättigungspegel des Bildsensors (6) angepasst ist.

2. Verfahren nach Anspruch 1,
**dadurch gekennzeichnet, dass**
das Projektionslicht (8, 8a) eine Wellenlänge im sichtbaren Spektrum aufweist.

3. Verfahren nach einem der vorhergehenden Ansprüche,
**dadurch gekennzeichnet, dass**
- eine Einheit aus einer nicht leeren zweiten Teilsequenz der Sequenz von Bildern und der ersten Teilsequenz die Sequenz von Bildern bildet und
- Differenzbilder unter Verwendung von Bildern der ersten und der zweiten Teilsequenz bereitgestellt werden.

4. Verfahren nach Anspruch 3,
**gekennzeichnet durch**
lokales Identifizieren und Verwerfen von Bildern der zweiten Teilsequenz aus der Sequenz von Bildern, wobei das Identifizieren unter Verwendung zumindest der Bilder und der Informationen über den Bildsensor (6) erfolgt.

5. Verfahren nach Anspruch 4,
**dadurch gekennzeichnet, dass**
das Identifizieren auf der Synchronisation basiert.

6. Verfahren nach einem der vorhergehenden Ansprüche,
**dadurch gekennzeichnet, dass**
die Sequenz von Bildern wie ein Rolling Shutter erfasst wird und das Synchronisieren zumindest für die Rolling-Shutter-Abtastzeilen erfolgt, die Teile des Bildsensors (6) schneiden, auf die das empfangene Projektionslicht (9) fällt.

7. Verfahren nach einem der vorhergehenden Ansprüche,
**gekennzeichnet durch**
Anzeigen der ersten Sequenz für einen Benutzer des Instruments zur elektronischen Vermessung.

8. Instrument zur elektronischen Vermessung, insbesondere eine Totalstation, ein Lasertracker, ein elektronischer Entfernungsmesser, ein Absteckinstrument oder ein Laserscanner, mit
- einer Projektionslichtemissionseinheit (3), insbesondere einem Laser,
- einem optischen Emissionslichtpfad (2, 5, 16) von der Projektionslichtemissionseinheit (3) zu einem Objekt (1),
- einem Bildsensor (6),
- einem optischen Empfangslichtpfad (2, 5, 13, 15, 15a) von dem Objekt (1) zu dem Bildsensor (6) mit einer Bildfrequenz, insbesondere 20 fps oder höher, wobei der Bildsensor (6) derart konfiguriert, dass nach jeder Bilderfassungsphase eine Bilderfassungspause folgt, wobei der Bildsensor für das Projektionslicht (8, 8a, 9) empfindlich ist,
**dadurch gekennzeichnet, dass**
die Projektionslichtemissionseinheit (3) und der Bildsensor (6) derart synchronisiert sind, dass das Verfahren nach einem der Ansprüche 1 bis 6 bereitgestellt wird.

9. Instrument zur elektronischen Vermessung nach Anspruch 8,
umfassend eine Steuerungseinheit (4a, 4b, 4c), die dazu konfiguriert ist, die Synchronisation zwischen der Projektionslichtemissionseinheit (3) und dem Bildsensor (6) bereitzustellen.

10. Instrument zur elektronischen Vermessung nach Anspruch 8 oder 9,
**dadurch gekennzeichnet, dass**
der optische Empfangslichtpfad (2, 5, 13, 15, 15a) frei von dedizierten optischen Filtern für das Projektionslicht (9) ist.

11. Instrument zur elektronischen Vermessung nach Anspruch 9,
**dadurch gekennzeichnet, dass**
die Projektionslichtemissionseinheit (3) ein Zerhackerrad (11) oder einen Flüssigkristallverschluss (12) umfasst, wobei das Zerhackerrad (11) oder der Flüssigkristallverschluss (12) von der Steuerungseinheit (4b, 4c) gesteuert wird und/oder die Steuerungseinheit (4a) dazu konfiguriert ist, die Projektionslichtemissionseinheit (3) ein- und auszuschalten.

12. Instrument zur elektronischen Vermessung nach einem der Ansprüche 9 bis 11,
**dadurch gekennzeichnet, dass**
das Instrument zur elektronischen Vermessung ferner eine Anzeige umfasst, wobei die Anzeige insbesondere über eine drahtlose oder drahtgebundene Verbindung mit dem Bildsensor (6) und/oder der Steuerungseinheit (4a, 4b, 4c) verknüpft ist, dazu konfiguriert, die erste Teilsequenz für einen Benutzer des Instruments zur elektronischen Vermessung anzuzeigen.

## Revendications

1. Procédé pour un instrument d'arpentage électronique, en particulier une station totale, un dispositif de poursuite laser, un télémètre électronique, un instrument de piquetage ou un scanneur laser, avec
• l'émission d'une lumière de projection (8, 8a), en particulier d'une lumière laser provenant d'un laser (3), de manière ciblée vers un objet (1) pour indiquer un état de ciblage à un utilisateur,
• la réception d'au moins une partie de la lumière de projection (9, 9a) réfléchie par l'objet (1), et
• acquérir une séquence d'images de l'objet à l'aide d'un capteur d'image (6) avec une fréquence d'image, en particulier 20 fps ou plus, et une succession induite (6a, 6c, 6d) de phases d'acquisition d'image et de pauses d'acquisition d'image, le capteur d'image étant sensible pour la lumière de projection (8, 8a),
**caractérisé par**
la synchronisation de l'émission d'une lumière de projection (8, 8a) et l'acquisition de la séquence d'images de telle sorte que, pour une première sous-séquence de la séquence d'images, une puissance reçue de la lumière de projection reçue est plus faible pendant des phases d'acquisition d'image correspondant à la première sous-séquence que pendant les temps restants qui ne sont pas des phases d'acquisition d'image correspondant à la première sous-séquence, de telle sorte que
• pour au moins la première sous-séquence, la puissance reçue est nulle pendant des phases d'acquisition d'image, et/ou
• la puissance reçue dans la première sous-séquence est adaptée à un niveau de saturation du capteur d'image (6).

2. Procédé selon la revendication 1,
**caractérisé en ce que**
la lumière de projection (8, 8a) a une longueur d'onde dans le spectre visible.

3. Procédé selon l'une quelconque des revendications précédentes, **caractérisé en ce que**
• une union d'une seconde sous-séquence non vide de la séquence d'images et de la première sous-séquence forme la séquence d'images, et
• des images de différence utilisant des images de la première et de la seconde sous-séquence sont fournies.

4. Procédé selon la revendication 3,
**caractérisée par**
l'identification et l'élimination *in situ* des images de la seconde sous-séquence de la séquence d'images, dans lequel l'identification est effectuée à l'aide au moins des images et des informations relatives au capteur d'image (6).

5. Procédé selon la revendication 4,
**caractérisé en ce que**
l'identification est basée sur la synchronisation.

6. Procédé selon l'une quelconque des revendications précédentes,
**caractérisé en ce que**
la séquence d'images est acquise en mode obturateur déroulant (« rolling shutter »), et la synchronisation est au moins effectuée pour des parties d'intersection de lignes de balayage d'obturateur déroulant du capteur d'image (6) sur lesquelles tombe la lumière de projection (9) reçue.

7. Procédé selon l'une quelconque des revendications précédentes,
**caractérisé par**
l'affichage de la première séquence à un utilisateur de l'instrument d'arpentage électronique.

8. Instrument d'arpentage électronique, en particulier une station totale, un dispositif de poursuite laser, un télémètre électronique, un instrument de piquetage ou un scanneur laser, avec
• une unité d'émission de lumière de projection (3), en particulier un laser,
• un trajet optique d'émission de lumière (2, 5, 16) de l'unité d'émission de lumière de projection (3) vers un objet (1),
• un capteur d'image (6),
• un trajet optique de réception de lumière (2, 5, 13, 15, 15a) de l'objet (1) vers le capteur d'image (6) avec une fréquence d'image, en particulier 20fps ou plus, dans lequel le capteur d'image (6) est configuré de telle sorte qu'après chaque phase d'acquisition d'image suit une pause d'acquisition d'image, le capteur d'image étant sensible pour la lumière de projection (8, 8a, 9),
**caractérisé en ce que**
l'unité d'émission de lumière de projection (3) et le capteur d'image (6) sont synchronisés de sorte à fournir le procédé selon l'une des revendications 1 à 6.

9. Instrument d'arpentage électronique selon la revendication 8, comprenant une unité de commande (4a, 4b, 4c) configurée pour assurer la synchronisation entre l'unité d'émission de lumière de projection (3) et le capteur d'image (6).

10. Instrument d'arpentage électronique selon la revendication 8 ou 9,
**caractérisé en ce que**
le trajet optique de réception de lumière (2, 5, 13, 15, 15a) est dépourvu de filtres optiques dédiés pour la lumière de projection (9).

11. Instrument d'arpentage électronique selon la revendication 9,
**caractérisé en ce que**
l'unité d'émission de lumière de projection (3) comprend une roue d'interrupteur périodique (11) ou un obturateur à cristaux liquides (12), dans lequel la roue d'interrupteur périodique (11) ou l'obturateur à cristaux liquides (12) sont commandés par l'unité de commande (4b, 4c), et/ou l'unité de commande (4a) est configurée pour allumer et éteindre l'unité d'émission de lumière de projection (3).

12. Instrument d'arpentage électronique selon l'une des revendications 9 à 11,
**caractérisé en ce que**
l'instrument d'arpentage électronique comprend en outre un afficheur, dans lequel l'afficheur est en particulier relié par connexion sans fil ou filaire au capteur d'image (6) et/ou à l'unité de commande (4a, 4b, 4c), configuré pour afficher la première sous-séquence à un utilisateur de l'instrument d'arpentage électronique.
